# EUROPEAN PATENT APPLICATION

(11) **EP 2 213 356 A1**
(43) Date of publication of application: **04.08.2010**
(21) Application number: 08838576.0
(22) Date of filing: 10.10.2008
(51) Int. Cl.: B01D 39/16, A47L 9/10, A47L 9/12, B32B 5/24, D04H 1/46

(54) **AIR FILTER AND AIR FILTER ASSMEBLY FOR CLEANER MADE BY USING THE FILTER**

(30) Priority: 19.10.2007 JP 2007273111
(71) Applicant: Japan Gore-Tex Inc., Tokyo 156-8505 (JP)
(72) Inventor: YAMAKAWA, Keiichi, Tokyo 156-8505 (JP)
(74) Representative: Shanks, Andrew
(86) International application number: PCT/JP2008/068416
(87) International publication number: WO 2009/051066

(57) **Abstract**

The invention aims at providing an air filter which is improved in the tight adhesion between an ePTFE membrane and a permeable support material without impairing the mechanical strength and permeability of the support material. An air filter produced by laminating a permeable support material (1) having a region wherein fibers different in fiber diameter are entangled and a porous polytetrafluoroethylene membrane (2), wherein the mean fiber diameter of the membrane-side face of the support material (1) is smaller than that of the back of the support material (1).

## Description

### TECHNICAL FIELD

The present invention relates to an air filter, and, for example, to a material of an air filter used mainly for removing foreign matter in a cleaner and the like.

### BACKGROUND ART

Recently, a porous polytetrafluoroethylene membrane (hereinafter, referred to as "ePTFE membrane", and note that, in the following description concerning Patent Documents 1 and 2, the terms are ones used in these documents) is used as a filter material of an air filter for use in a cleaner such as a dust collector and an air cleaner. This is because: the ePTFE membrane has excellent pressure loss characteristic and collection efficiency; and when the air filter is clogged due to foreign matter such as dust and dirt, the air filter allows the foreign matter to be easily removed therefrom by shaking the air filter, or the like.

Further, an ePTFE membrane that is very thin and includes a relatively small number of nodes and long fibrils, is used in order to achieve both a low pressure loss and a high collection efficiency of an air filter. Thus, the ePTFE membrane is very weak with respect to an external force, and a hole is easily formed therein. In order to prevent this, the ePTFE membrane needs to be reinforced, for example, by laminating a permeable support material on the ePTFE membrane.

However, as described above, pressure and vibration are periodically applied to the air filter, and thus the ePTFE membrane laminated on the support material is likely to peel off. As a countermeasure for this, Japanese Laid-Open Patent Publication No. 2000-176226 (Patent Document 1) discloses a technology in which a PTFE porous film, and a permeable base material that is a reinforcing material, are included, and a permeable protective layer that is smoother than the permeable base material is interposed between the PTFE porous film and the permeable base material, thereby suppressing this peeling. Specifically, in the invention described in Patent Document 1, the number of contact points between the PTFE porous film and the permeable base material is increased, thereby firmly connecting the PTFE porous film to the permeable support material. In addition, by so doing, the PTFE porous film with a low strength can be protected assuredly, and the durability is also improved.

Further, Japanese Laid-Open Patent Publication No. 2004-097998 (Patent Document 2) also discloses a similar technology. Specifically, Patent Document 2 discloses a filter for a dust collector, which includes, in order from an entry side of air containing dust: a polytetrafluoroethylene porous film; a first permeable support material that is laminated on the polytetrafluoroethylene porous film and has a tension strength, in an optional direction, of 1.5 N/cm or more; and a second permeable support material that has a rugged shape on its surface and is laminated on the surface of the first permeable support material that is opposite to the surface of the first permeable support material on which the polytetrafluoroethylene porous film is laminated.

### DISCLOSURE OF THE INVENTION

### PROBLEMS TO BE SOLVED BY THE INVENTION

However, when two permeable base materials (or permeable support materials) are laminated to each other as in Patent Documents 1 and 2 , the adhesiveness between the permeable base materials is weak. Further, when heating or the like is conducted for improving the adhesiveness, there is a problem that the permeability of the permeable base materials decreases.

In Patent Document 2, after the first permeable support material and the polytetrafluoroethylene porous film are laminated to each other, the second permeable support material is laminated thereon. Addition of such a subsequent process increases the cost of the filter materials. In addition, it is difficult to firmly adhere two types of permeable support materials to each other in the subsequent process, and a sufficient strength is not ensured by heat-sealing that is conducted by melting the constituent fibers. Thus, for example, inter-layer peeling may occur due to heat and/or pressure applied when a frame is formed on a filter material by injection molding or the like, and thus leakage may occur. In such a case, it is necessary to melt more of the permeable support material itself, in order to firmly adhere the material. However, the permeability of the permeable support material is deteriorated, and performance desired as an air filter (filter material) cannot be exerted.

The present invention is made focusing on the above situation, and its object is to provide an air filter that has increased contact points between a permeable support material and an ePTFE membrane, thereby improving the adhesiveness between the ePTFE membrane and the permeable support material without deteriorating the mechanical strength and the permeability of the permeable support material.

### MEANS FOR SOLVING THE PROBLEMS

An air filter of the present invention having achieved the above-described object is comprised of : a permeable support material having a region where fibers having a different diameters are entangled with each other; and a porous polytetrafluoroethylene membrane laminated on the permeable support material, wherein an average fiber diameter in a front surface of the permeable support material on which the porous polytetrafluoroethylene membrane is laminated is smaller than an average fiber diameter in a back surface of the permeable support material.

A mode is recommended such that an average fiber diameter in the region of the permeable support material where the fibers are entangled with each other decreases toward the porous polytetrafluoroethylene membrane side.

A mode is recommended such that the average fiber diameter in the front surface of the permeable support material on which the porous polytetrafluoroethylene membrane is laminated is equal to or less than 0.8 times the average fiber diameter in the back surface of the permeable support material.

Preferably, the permeable support material can be formed from a thermoplastic resin. A mode is recommended such that the permeable support material has a region where fibers having different diameters are entangled with each other by a water flow or an air flow.

The air filter is preferably used as an air filter assembly for a vacuum cleaner.

### EFFECT OF THE INVENTION

According to the present invention, the average fiber diameter in the front surface of the permeable support material on which the ePTFE membrane is laminated is caused to be smaller than the average fiber diameter in the back surface of the permeable support material, thereby smoothing the front surface of the permeable support material. Thus, the number of contact points between the ePTFE membrane and the permeable support material increases, and the adhesiveness therebetween can be improved. In addition, the permeable support material has the region where fibers having different diameters are entangled with each other, and thus the peel resistance inside the permeable support material is very high.

Therefore, the present invention can provide an air filter that has an improved peel strength between the ePTFE membrane and the permeable support material without deteriorating the mechanical strength and the permeability of the permeable support material.

### BRIEF DESCRIPTION OF THE DRAWINGS

[FIG. 1]FIG. 1 is a cross-sectional view of an air filter according to an embodiment.
[FIG. 2] FIG. 2 is a bird's-eye view showing a part of a general facility for producing a nonwoven fabric.
[FIG. 3] FIG. 3 is a view showing an exemplary production process of the air filter according to the embodiment.
[FIG. 4] FIG. 4 is a partially enlarged view of the exemplary production process shown in FIG. 3.
[FIG. 5] FIG. 5 is an SEM image obtained by observation of a produced permeable support material 1 on a fiber sheet 6a side.
[FIG. 6] FIG. 6 is an SEM image obtained by observation of the permeable support material 1 on a fiber sheet 6b side.
[FIG. 7] FIG. 7 is a cross-sectional SEM image of a permeable support material 1 in Example 1.
[FIG. 8] FIG. 8 is a cross-sectional SEM image of a permeable support material 1 in Example 2.

### DESCRIPTION OF THE REFERENCE CHARACTERS

- 1: permeable support material
- 2: ePTFE membrane
- 3: stirring space
- 4: raw fiber
- 5: carding machine
- 6: fiber sheet
- 7: heat roll
- 8: winding roll
- 9: water jet machine
- 10: conveyor
- 11: jet water flow generation part
- 12: water recovery part
- 13: endless belt
- 14, 15: rotation shaft
- 16: calender part
- 17: winding roll

### BEST MODE FOR CARRYING OUT THE INVENTION

The following will describe an air filter according to an embodiment of the present invention with reference to the drawings.

### (1) Structure of Air Filter

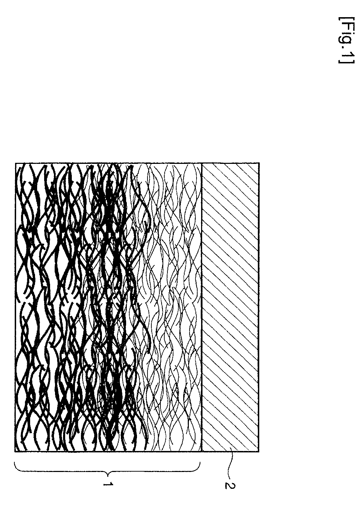

FIG. 1 is a cross-sectional view of an air filter according to an embodiment. In FIG. 1, an ePTFE membrane 2 formed from porous polytetrafluoroethylene is laminated on a permeable support material 1.

An average fiber diameter in a front surface of the permeable support material 1 on which the ePTFE membrane 2 is laminated, is smaller than an average fiber diameter in the back surface of the permeable support material 1. In other words, the diameter of a fiber present in the front surface of the permeable support material 1 that faces the ePTFE membrane 2 is smaller than the diameter of a fiber present in the back surface of the permeable support material 1. Thus, the number of points where the fiber contact the ePTFE membrane 2 increases, and the adhesiveness between the permeable support material 1 and the ePTFE membrane 2 is improved.

Here, to obtain the "average fiber diameter" of the permeable support material 1, one diagonal line is drawn in a photograph (e.g., a scanning electron microscope (SEM) photograph) obtained by photographing the permeable support material 1 at a magnification of 50 to 300 times, and the diameters of 20 or more fibers intersecting the line are read, and their arithmetical mean value is regarded as an average fiber diameter.

The average fiber diameter in the front surface of the permeable support material 1 on which the ePTFE membrane 2 is laminated is equal to or less than preferably 0.8 times, more preferably 0.71 times, and even more preferably 0.58 times, of the average fiber diameter in the back surface of the permeable support material 1, in light of increasing the number of contact points between the permeable support material 1 and the ePTFE membrane 2.

Further, the permeable support material 1 has a region where a fiber having a large diameter is entangled with a fiber having a small diameter. Due to such entanglement, the front side and back side of the permeable support material 1 are firmly fixed to each other, and thus it is unnecessary to fusion-bond the fibers with each other by application of heat as in a conventional art.

The fibers themselves are not melted, and thus the permeability of the permeable support material 1 is not deteriorated. However, after the fiber having the large diameter is entangled with the fiber having the small diameter, it is possible to accessorily apply heat to the both fibers in order to further enhance the joining strength between the both fibers.

When the average fiber diameter in the region of the permeable support material 1 where the fibers are entangled with each other is caused to decrease toward the ePTFE membrane 2 side. This is advantageous for preventing peeling or separation of the permeable support material 1 itself, because the density in the thickness direction of the permeable support material 1 becomes continuous, and there are no sudden change points in terms of structure.

For the ePTFE membrane 2, a porous polytetrafluoroethylene material (ePTFE: expanded porous polytetrafluoroethylene) can be used. Even though the thickness and the porosity thereof are not particularly limited to specific values, the thickness is preferably 1 to 50 µm (more preferably 2 to 40 µm) and the porosity is preferably 80% to 99% (more preferably 85% to 98%).

The porous polytetrafluoroethylene is obtained by: mixing a fine powder of PTFE with a molding aid; molding the mixture; removing the molding aid; expanding the molded product at a high temperature and at a high speed; and baking the expanded product according to need. This ePTFE may be one obtained by uniaxial expansion, but is preferably one obtained by biaxial expansion. Uniaxially-expanded PTFE has a micro **characteristic in that**: there are nodes that have a thin island pattern (folded crystals) extending so as to be substantially perpendicular to the expansion direction; and fibrils (linear molecule bundles appearing due to the folded crystals being unraveled and pulled out as a result of expansion) extend in a reed-screen pattern so as to connect between the nodes and are oriented in the expansion direction. In addition, biaxially-expanded PTFE has a micro **characteristic in that**: fibrils spread out radially and nodes connecting the fibrils are scattered in an island patter, thereby forming a webbed fibrous structure in which there are numerous spaces defined by the fibrils and the nodes.

The porous polytetrafluoroethylene has excellent pressure loss characteristic and collection efficiency. In addition, when the air filter is clogged due to foreign matter such as dust and dirt, the porous polytetrafluoroethylene allows the foreign matter to be easily removed therefrom by shaking the air filter, or the like. Thus, the porous polytetrafluoroethylene is advantageous as a material of an air filter for use in a cleaner.

### (2) Production Example of Air Filter

The following will describe a production example of the air filter described above. The permeable support material 1 has the region where the fibers having different diameters are entangled with each other, and such a permeable support material 1 can be produced by: laminating two webbed fiber sheets having different fiber diameters; and entangling the fibers of the sheets with each other. Thus, first, a method of producing a webbed fiber sheet will be described.

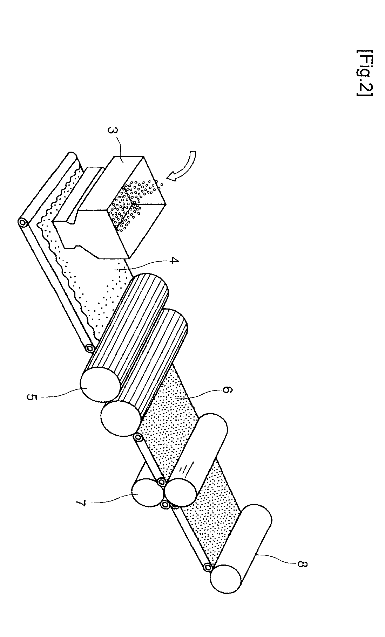

FIG. 2 is a bird's-eye view showing a part of a general facility for producing a nonwoven fabric. In FIG. 2, a short fiber that is a material of the nonwoven fabric is fed into a stirring space 3, and opened by an air flow. The opened raw fiber 4 is sent out by a carding machine 5 in a constant amount and in a constant direction. What is sent out from the carding machine 5 is a webbed fiber sheet 6.

In a general process of producing a nonwoven fabric, the webbed fiber sheet 6 is further passed between heat rolls 7 to form a nonwoven fabric, which is in turn wound by a winding roll 8. On the contrary, in the production example of the air filter according to the embodiment, two types of webbed fiber sheets 6 having different fiber diameters are prepared, and these fiber sheets 6 are stacked on each other while being in a webbed state, and a region where the fibers of the sheets are entangled with each other is formed by a later-described method.

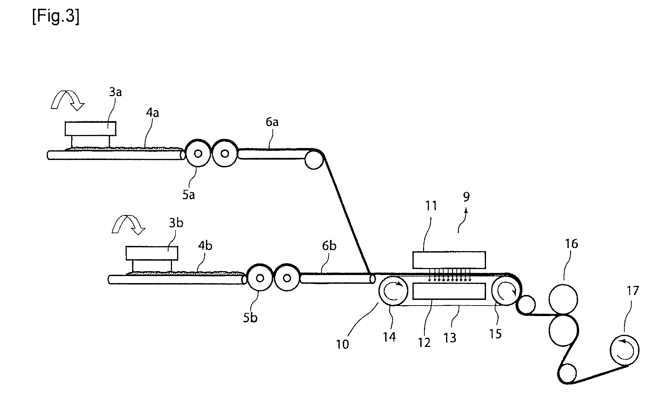

FIG. 3 is a view showing an exemplary production process of the air filter according to the embodiment. In FIG. 3, a short fiber having a small average fiber diameter, which is a material of the air filter, is fed into a stirring space 3a and opened by stirring with an air flow. The opened raw fiber 4a is sent out by a carding machine 5a in a constant amount and in a constant direction. What is sent out from the carding machine 5a is a webbed fiber sheet 6a.

Similarly, a short fiber having an average fiber diameter larger than that of the short fiber that is fed into the stirring space 3a, is fed into a stirring space 3b, to obtain a webbed fiber sheet 6b.

Then, the webbed fiber sheets 6a and 6b are transferred to a water jet machine 9 while being stacked on each other. The water jet machine 9 mainly includes: a conveyor 10 that conveys a fiber sheet; a jet water flow generation part 11 that sprays water to the fiber sheet; and a water recovery part 12 for recovering the water discharged from the jet water flow generation part 11. The conveyor 10 has: an endless belt 13 made from a wire-mesh-like breathable material; and rotation shafts 14 and 15 for rotating the endless belt 13, and the endless belt 13 endlessly rotates. The endless belt 13 has a coarse mesh size that allows a water flow to sufficiently pass therethrough.

In the water jet machine 9, a jet water flow is injected from the fiber sheet 6a side, thereby entangling the fibers of the fiber sheets 6a and 6b with each other.

Further, according to need, the fibers of the fiber sheets 6a and 6b are preferably hot-pressed by a calender part 16, thereby strengthening the joining between the fiber sheets 6a and 6b.
By the above process, the permeable support material 1 is produced and wound by a winding roll 17.

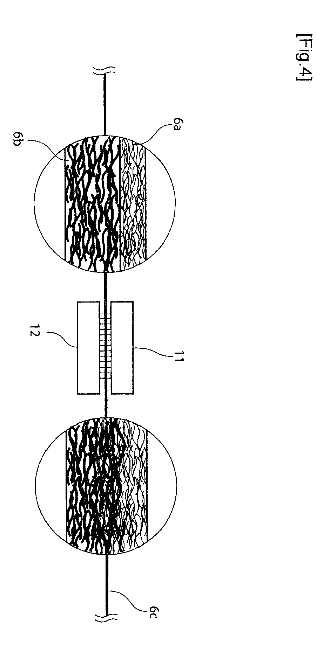

FIG. 4 is a partially enlarged view around the water jet machine 9 shown in FIG. 3. In FIG. 4, before entering the water jet machine 9, the webbed fiber sheets 6a and 6b are merely stacked on each other. However, after the webbed fiber sheets 6a and 6b move out of the water jet machine 9, a region where the fibers of the fiber sheets 6a and 6b are entangled with each other, is formed due to the action of the jet water flow.

Finally, the permeable support material 1 is fed from the winding roll 17 and fusion-bonded with the separately-prepared ePTFE membrane 2 by heat or pressure, to produce an air filter.

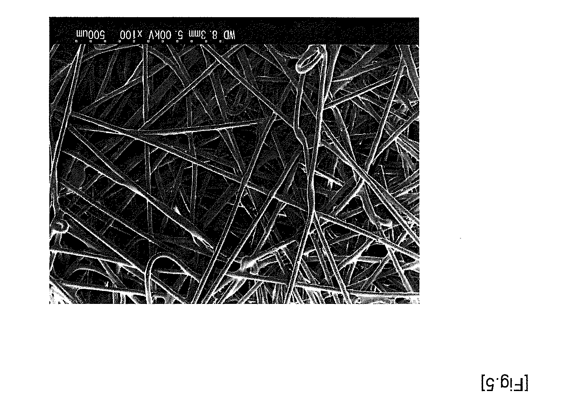

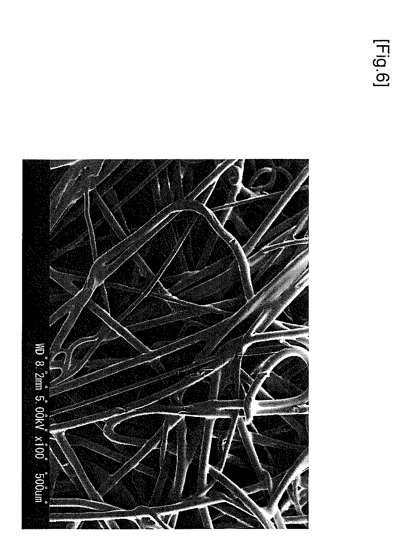

FIG. 5 is an SEM image obtained by observation of the produced permeable support material 1 on the fiber sheet 6a side. FIG. 6 is an SEM image obtained by observation of the produced permeable support material 1 on the fiber sheet 6b side. Cross-sectional enlarged images of the permeable support material 1 are shown in examples described later.

In the present embodiment, the entanglement of the fibers due to the water jet has been described. However, other than the method using a water jet, the fibers of the fiber sheets 6a and 6b can be also entangled with each other by an air flow (preferably heated air), needle punching, or a combination thereof. When the fibers are entangled with each other by heated air, the fibers are softened or melted due to the heat, and connected to each other at their contact points. Further, the method of hot-pressing the fibers of the fiber sheets 6a and 6b by using the calender part 16 has been described. However, in addition to that, the fibers can be firmly fixed to each other by adding a process of impregnating the fibers with a liquid containing a binder resin and drying the fibers, according to need.

Moreover, instead of the web that forms the fiber sheet 6a, a net material, a nonwoven fabric, a woven fabric, or the like can be used. However, when these materials are used, the fibers of the fiber sheets 6a and 6b are less easily entangled with each other, and thus inter-layer peeling is likely to occur. In addition to the calender processing, a water jet, an air flow (preferably heated air), needle punching, and the like, are preferably used for assuredly forming the entanglement region.

The materials of the used short fiber, net material, nonwoven fabric, and woven fabric are not limited to specific ones. However, when a fiber formed from a thermoplastic resin is used for the side that becomes the surface adhered to the ePTFE membrane 2, a heat-sealing method can be used in which the ePTFE membrane 2 and the permeable support material are fusion-bonded with each other by melting the fiber of the permeable support material. According to this method, the ePTFE membrane 2 can be adhered to the permeable support material 1 without using an adhesive, thereby reducing the production cost. In addition, the processing can be conducted by using general machines such as a heater roll and a nip roll (rubber roll), thereby reducing the facility cost.

As the thermoplastic resin fiber, a fiber formed from nylon, polyester, polypropylene, or polyethylene, or a fiber formed from a combination of these resins, for example, a fiber having a core-in-sheath structure, can be used.

The fiber densities on the front and back sides of the permeable support material 1 can be changed by changing the number of fibers or changing the fiber diameter, and a specific method for the latter one will be described. A carding machine is generally designed so as to be able to feed a fiber at a constant weight. If a fiber diameter is large, the number of fibers is low, and if a fiber diameter is small, the number of fibers is high. Based on this, it is possible to create a fiber density difference. Therefore, the method for the latter one is realistic.

As a method of providing a difference between the average fiber diameters of the fiber sheets 6a and 6a, the method in which two types of short fiber materials α (small fiber diameter) and β (large fiber diameter) having different fiber diameters are fed into the stirring spaces 3a and 3b, respectively, can be implemented, and, in addition, a method in which the short fiber materials α and β are blended and fed into the stirring spaces 3a and 3b such that the blending ratios are different from each other, thereby providing a difference between the average fiber diameters of the produced fiber sheets 6a and 6b, can be implemented.

There are not only fibers having a simple circular cross-sectional shape, but also fibers having other cross-sectional shapes. Thus, as an index regarding the diameter of the short fiber used as a raw material, mass [g] per 10,000 m of fiber (dtex: decitex) is often used. In order to increase the number of contact points between the ePTFE membrane 2 and the fiber sheet 6a, the fiber sheet 6a has a dtex value that is equal to or less than preferably 1/2, and more preferably 1/3, of that of the fiber sheet 6b.

From these preferable ranges of fiber weight, in the case of using the average fiber diameter as an index, the average fiber diameter of the fiber sheet 6a is equal to or less than preferably 1/1.41 (0.71), and more preferably 1/1.73 (0.58), of that of the fiber sheet 6b. The fiber diameter can be determined by observation using a scanning electron microscope (SEM) or an optical microscope.

The performance of the ePTFE membrane 2 is set as appropriate in accordance with its use, in view of pressure loss, collection efficiency, and durability, and the like, which are desired for an air filter. In the case of performance called medium performance in air filter, the collection efficiency is 50% to 99.9% (particle size: 0.3 µm, air passing speed: 5.3 cm/sec), and the pressure loss is equal to or less than 150 Pa and desirably equal to or less than 100 Pa.

In the case of a HEPA filter (High Efficiency Particulate Air filter), the collection efficiency is 99.9% to 99.9995% (particle size: 0.3 µm, air passing speed: 5.3 cm/sec), and the pressure loss is equal to or less than 300 Pa and desirably equal to or less than 250 Pa.

In the case of a ULPA filter (Ultra Low Penetration Air Filter), the collection efficiency is equal to or higher than 99.9995% (particle size: 0.1 to 0.2 µm), and the pressure loss is equal to or less than 400 Pa and desirably equal to or less than 350 Pa.

The thickness of the ePTFE membrane 2 is set in view of the durability, the performance, and the reliability of an air filter, but the thickness is 1 to 50 µm and desirably 2 to 40 µm as described above. For measuring the thickness, a 1/1000 dial thickness gauge (SM1201, manufactured by Teclock Corporation) can be used.

### EXAMPLE

The following will describe the present invention more specifically by averages of examples. However, the present invention is not limited by the following examples, it is naturally possible to practice the present invention with appropriate modifications as long as they conform to the effect in the descriptions above and below, and these modifications are included in the technological scope of the present invention.

### (Example 1)

A permeable support material 1 having a mass per unit area of 100 g/m² was produced by using a fiber having a dtex value of 2.2 as a material of the fiber sheet 6a, and using a fiber having a dtex value of 16 as a material of the fiber sheet 6b. The fibers used are polyester fibers each having a core-in-sheath structure (Melty, manufactured by Unitika Fibers Ltd.). The lower the dtex value is, the smaller the average fiber diameter is.

Specifically, as shown in FIG. 3, two carding machines 5a and 5b were used, and a webbed fiber sheet 6a was produced by the carding machine 5a, and a webbed fiber sheet 6b was produced by the carding machine 5b. These sheets were stacked on each other, and the fibers thereof were entangled with each other by a water jet. Then, coloring, water-repellent treatment, antibacterial treatment, and fungiproofing treatment were conducted by a coating method.

As the ePTFE membrane 2, an ePTFE membrane (S2-A10012M, manufactured by Japan Gore-Tex, Inc.) having a pore size of 5 µm, a thickness of 10 µm, and a porosity of 95.5% was used. The film was fusion-bonded with the above permeable support material 1 by heat and pressure, to produce an air filter sample. The filter sample had a pressure loss of 42.2 Pa and a collection efficiency of 95%.

It is noted that, after the fibers of the fiber sheets 6a and 6b were entangled with each other and the coloring, the water-repellent treatment, the antibacterial treatment, and the fungiproofing treatment were conducted by the coating method, the fibers may be adhered to each other by heating that is also intended for drying. This heating further improves the peel resistance between the fiber sheets 6a and 6b.

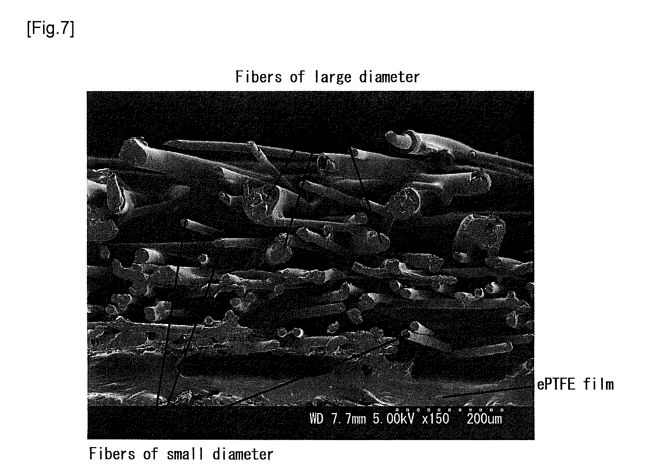

FIG. 7 is a cross-sectional SEM image (150 times) of the permeable support material 1 in Example 1. From FIG. 7, it can be seen that, in the permeable support material 1, the ePTFE membrane 2 is laminated on the side where the fiber diameter is small, and the fiber diameter in the back side of the permeable support material 1 is large. It can be also seen that a region where the thin fiber and the thick fiber are entangled with each other is formed inside the permeable support material 1.

Measurement of a peel strength was attempted by peeling off the fiber sheets 6a and 6b from each other, but the fiber sheets 6a and 6b were firmly integrated to each other to an extent that margins to be grasped (parts from which both of the sheets were to be peeled off) could not be created in the fiber sheets 6a and 6b.

Further, in a peel test for the ePTFE membrane 2 and the permeable support material 1, the ePTFE membrane 2 broke at a location ahead of the end of a peeling tape adhered to the ePTFE membrane 2. According to this, it was confirmed that the ePTFE membrane 2 is adhered sufficiently and peeling is less likely to occur at the interface between the ePTFE membrane 2 and the permeable support material 1.

### (Example 2)

A permeable support material 1 having a mass per unit area of 100 g/m² was produced by using a fiber having a dtex value of 4.4 as a material of the fiber sheet 6a, and using a fiber having a dtex value of 16 as a material of the fiber sheet 6b. The fibers used are polyester fibers each having a core-in-sheath structure (Melty, manufactured by Unitika Ltd.).

Similarly as in Example 1, two carding machines 5a and 5b were used, and a webbed fiber sheet 6a was produced by the carding machine 5a, and a webbed fiber sheet 6b was produced by the carding machine 5b. These sheets were stacked on each other, and the fibers thereof were entangled with each other by a water jet. Then, coloring, water-repellent treatment, antibacterial treatment, and fungiproofing treatment were conducted by a coating method.

As the ePTFE membrane 2, the same one was used as in Example 1. The film was fusion-bonded with the above permeable support material 1 by heat and pressure, to produce an air filter sample. The filter sample had a pressure loss of 32 Pa and a collection efficiency of 96.4%.

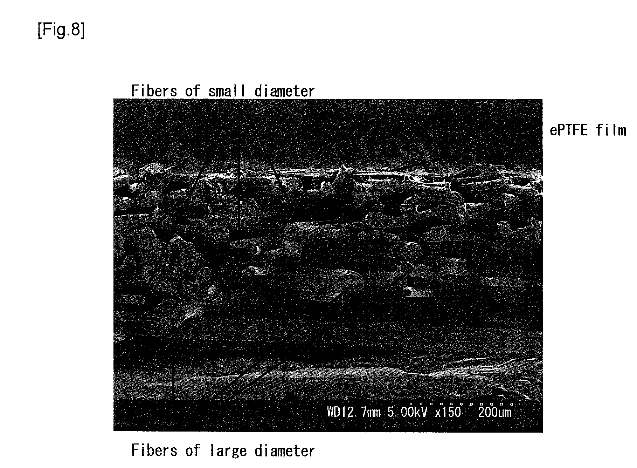

FIG. 8 is a cross-sectional SEM image (150 times) of the permeable support material 1 in Example 2. From FIG. 8, similarly as in FIG. 7, it can be seen that a region where the thin fiber and the thick fiber are entangled with each other is formed inside the permeable support material 1.

A peel strength test was attempted by peeling off the fiber sheets 6a and 6b from each other. However, the fiber sheets 6a and 6b were firmly integrated to each other to an extent that margins to be grasped could not be created in the fiber sheets 6a and 6b, and the peel strength could not be measured.

Further, in a peel test for the ePTFE membrane 2 and the permeable support material 1, the ePTFE membrane 2 broke at a location ahead of the end of a peeling tape. Similarly as in Example 1, according to this, it was confirmed that the ePTFE membrane 2 is firmly adhered to the permeable support material 1.

### (Comparative Example 1)

A nonwoven fabric having a two-layer structure was produced by: conducting coloring, water-repellent treatment, antibacterial treatment, and fungiproofing treatment on a thermalbond nonwoven fabric (TKC95, manufactured by Kurashiki Textile Manufacturing Co., Ltd.) formed from a polyester fiber; and laminating a spunbond lamination nonwoven fabric (Eleves (mass per unit area : 30 g/m²) , manufactured by Unitika Ltd.) of PE/PET (polyethylene/polyethylene terephthalate), which has a core-in-sheath structure, on the thermobond nonwoven fabric by averages of heat-sealing.

The same ePTFE membrane 2 as used in Example 1 was fusion-bonded with the nonwoven fabric, having the two-layer structure, on the Eleves side by heat and pressure, to produce an air filter sample. This sample had a pressure loss of 41 Pa and a collection efficiency of 97.9%. The nonwoven fabric having the two-layer structure had a peel strength of 0.23 N/10mm. In addition, in a peel test for the ePTFE membrane 2 and the nonwoven fabric, the ePTFE membrane 2 broke at a location ahead of the end of a peeling tape. According to this, it was confirmed that the ePTFE membrane 2 is sufficiently adhered to the nonwoven fabric and peeling is less likely to occur at the interface between the ePTFE membrane 2 and the nonwoven fabric.

### (Comparative Example 2)

A nonwoven fabric having a two-layer structure was produced by: conducting coloring, water-repellent treatment, antibacterial treatment, and fungiproofing treatment on Eleves (mass per unit area: 30 g/m²), manufactured by Unitika Ltd.; and laminating TKC95, manufactured by Kurashiki Textile Manufacturing Co., Ltd., on the Eleves by averages of heat-sealing.

The same ePTFE membrane 2 as used in Example 1 was fusion-bonded with the nonwoven fabric, having the two-layer structure, on the Eleves side by heat and pressure, to produce an air filter sample. This sample had a pressure loss of 45 Pa and a collection efficiency of 97.0%. The nonwoven fabric having the two-layer structure had a peel strength of 0.062 N/10mm.

In addition, when this sample was cut into a 5 mm square for SEM photographing, peeling occurred between the nonwoven fabrics in the two-layer structure. Moreover, in a peel test for the ePTFE membrane 2 and the nonwoven fabric, the ePTFE membrane 2 broke at a location ahead of the end of a peeling tape. According to this, it was confirmed that the ePTFE membrane 2 is sufficiently adhered to the nonwoven fabric and peeling is less likely to occur.

### (Comparative Example 3)

An air filter sample was produced by fusion-bonding, by heat and pressure, the same ePTFE membrane 2 used as in Example 1 with a nonwoven fabric formed by passing the fiber sheet 6b, which consists of fibers having a large diameters, used in Example 1 between heat rolls. In a peel test for the ePTFE membrane 2 and the nonwoven fabric, only the ePTFE membrane kept peeling off further by 10 mm or more ahead of the end of a peeling tape, and it was confirmed that the ePTFE membrane 2 is not adhered sufficiently.

It is noted that, in each of the above Examples and Comparative Examples, DOP (di-octyl-phthalate) method was used for measuring the collection efficiency. The DOP method is conducted by: supplying DOP particles from an upstream side of an air filter sample at a flow rate of 5.3 cm/s; and measuring the concentration (dust concentration C₁) of the DOP particles on the upstream side of the air filter sample and the concentration (dust concentration C₂) of the DOP particles on the downstream side of the air filter sample.

Specifically, the collection efficiency is calculated by a formula of "collection efficiency η [%] = 100 - (C₂ C₁) × 100". The dust concentrations are measured by a particle counter.

The pressure loss is measured by measuring the pressure difference between an upstream side and a downstream side by using a pressure meter when wind is applied to an air filter sample at a surface wind velocity of 5.3 cm/s.

A test of peeling off the front side and back side of the permeable support material 1 (two-layer nonwoven fabric in Comparative Examples) from each other, was conducted by using a rectangular sample piece 30 mm wide and 250 mm long, which was cut out from an air filter sample. Margins to be grasped (parts from which the both sides are to be peeled off from each other) are created at an end of this sample piece, and a tension stress is measured when the both sides are peeled off from each other at a speed of 200 mm/min by using a peeling tape. It is noted that the long side direction of the sample piece is caused to be parallel with the longitudinal direction of the permeable support material 1.

For measurement of the peel resistance between the ePTFE membrane 2 and the permeable support material 1 (two-layer nonwoven fabric in Comparative Examples), a Neocraft Tape manufactured by Lintec Corporation was used. The craft tape is attached to the ePTFE membrane 2 in the longitudinal direction and the width direction and in an area having a width of 50 mm and a length of 100 mm or more, and then peeled off at a speed of 200 mm/min or less. At this time, even after the craft tape is peeled off, it is observed whether the ePTFE membrane 2 is further peeled off from the permeable support material 1 (two-layer nonwoven fabric in Comparative Example). If the ePTFE membrane 2 is peeled off, it can be determined that the adhesion is insufficient.

### INDUSTRIAL APPLICABILITY

The present invention is suitably applicable to an air filter. For example, the present invention is suitable for a material of an air filter used mainly for removing foreign matter in a cleaner and the like.

## Claims

1. An air filter comprising: a permeable support material having a region where fibers having a different diameters are entangled with each other; and a porous polytetrafluoroethylene membrane laminated on the permeable support material, wherein
an average fiber diameter in a front surface of the permeable support material on which the porous polytetrafluoroethylene membrane is laminated is smaller than an average fiber diameter in a back surface of the permeable support material.

2. The air filter according to claims 1, wherein an average fiber diameter in the region of the permeable support material where the fibers are entangled with each other decreases toward the porous polytetrafluoroethylene membrane side.

3. The air filter according to claims 1 or 2, wherein the average fiber diameter in the front surface of the permeable support material on which the porous polytetrafluoroethylene membrane is laminated is equal to or less than 0.8 times the average fiber diameter in the back surface of the permeable support material.

4. The air filter according to any one of claims 1 to 3, wherein the permeable support material is formed from a thermoplastic resin.

5. The air filter according to any one of claims 1 to 4, wherein the permeable support material has a region where fibers having different diameters are entangled with each other by a water flow or an air flow.

6. An air filter assembly, for a cleaner, in which an air filter according to any one of claims 1 to 5 is used.
